# EUROPÄISCHE PATENTSCHRIFT

(11) **EP 2 099 660 B1**
(45) Veröffentlichungstag und Bekanntmachung des Hinweises auf die Patenterteilung: **06.07.2016**
(21) Anmeldenummer: 07821050.7
(22) Anmeldetag: 09.10.2007
(51) Int. Cl.: B60S 1/38

(54) **WISCHBLATT**
WIPER BLADE
BALAI D'ESSUIE-GLACE

(30) Priorität: 04.12.2006 DE 102006057024
(43) Veröffentlichungstag der Anmeldung: 16.09.2009
(73) Patentinhaber: Robert Bosch GmbH, 70442 Stuttgart (DE)
(72) Erfinder: OP'T ROODT, Inigo, 3500 Hasselt (BE); VAN BAELEN, David, 3020 Winksele (BE)
(86) Internationale Anmeldenummer: PCT/EP2007/060679
(87) Internationale Veröffentlichungsnummer: WO 2008/068082

(56) Entgegenhaltungen:
- EP-A- 0 578 563
- DE-A1- 19 951 003
- US-A- 4 675 934

## Beschreibung

### Stand der Technik

Die Erfindung geht von einem Wischblatt nach dem Oberbegriff des Anspruchs 1 aus.

Aus der DE 85 15 052 U1 ist ein gattungsgemäßes Wischblatt bekannt. Das Tragbügelsystem besitzt einen Hauptbügel als übergeordneten Bügel, der gelenkig mit einem Zwischenbügel als untergeordneten Bügel verbunden ist. Der Zwischenbügel dient andererseits ebenfalls als übergeordneter Bügel in Bezug auf einen Krallenbügel, der gelenkig mit dem Zwischenbügel verbunden ist und zu diesem einen untergeordneten Bügel darstellt. Hierbei sind der übergeordnete Bügel und der untergeordnete Bügel aus Blech gefertigt. Sie werden durch ein Verbindungsstück aus Kunststoff gelenkig miteinander verbunden. Hierzu besitzt das Verbindungsstück in seinen Seitenwänden Federzungen, die an ihren Außenseiten vorspringende Abschnitte aufweisen, mit denen sie bei der Montage in Öffnungen der Seitenwände des übergeordneten Bügels einrasten. An den Innenseiten, den vorspringenden Abschnitten gegenüberliegend, sind Lagerzapfen angeordnet, die bei der Montage des untergeordneten Bügels in Öffnungen der Seitenwände des untergeordneten Bügels einrasten. Zur Vereinfachung der Montage besitzen die Lagerzapfen zur offenen Seite des u-förmigen Querschnittprofils Montageschrägen. Das Verbindungsstück besitzt ferner innen liegend, an seiner Deckwand angeformt, eine gekrümmte Wulst, die als Walzenlager für den untergeordneten Bügel dient, und an der sich dieser abstützt. Über das Walzenlager werden die Hauptanpresskräfte des Wischblatts vom Wischarm auf die Wischleiste übertragen, während die Lagerzapfen die geringeren Kräfte in entgegengesetzter Richtung aufnehmen. Durch die Teilevielfalt ergeben sich hohe Herstellkosten. Ferner stören die Öffnungen in den Seitenwänden des übergeordneten Profils den optischen Eindruck des Wischblatts.

Ferner ist aus der EP 0578 563 B1 ein Wischblatt mit einem Tragbügelsystem bekannt, das als übergeordneten Bügel einen Hauptbügel aufweist, dessen Enden jeweils mit einem Krallenbügel als untergeordnetem Bügel gelenkig verbunden sind. Der Hauptbügel und die Krallenbügel sind aus Kunststoff durch Formpressen hergestellt. Der Hauptbügel besitzt an den Enden vorspringende Federzungen mit Lagerbohrungen, die in einen Hohlraum des Krallenbügels eingreifen. Bei der Montage rasten entsprechende Lagerzapfen des Krallenbügels in die Lagerbohrungen ein. Die Lagerzapfen sind an der Innenseite einer Aussparung des Krallenbügels angeordnet und besitzen zur Vereinfachung der Montage Montageschrägen. Zur seitlichen Führung der Krallenbügel sind quer zur Längsrichtung des Hauptbügels verlaufende Querstege zu beiden Seiten der Lagerbohrungen vorgesehen. Außerdem ist in Längsrichtung zur Mitte des Hauptbügels versetzt ein Stift angeordnet, der in einen Hohlraum des Krallenbügels eingreift und zur zusätzlichen Führung insbesondere quer zur Längsrichtung des Hauptbügels dient.

Aus der DE 199 51 003 A1 ist eine gelenkige Verbindung bekannt, bei der ein erstes Bauteil mit einem u-förmigen Querschnittprofil, das in seinen elastisch aufweitbaren Seitenwänden Lageröffnungen aufweist, ein zweites Bauteil mit Lagerzapfen außen an seinen Seitenwänden umgreift, wobei die Lagerzapfen bei der Montage über Rampenflächen in die Lageröffnungen einrasten. Die Rampenflächen sind an den Lagerzapfen angeordnet. Die Lagerzapfen sind zwischen den Seitenwänden des zweiten Bauteils über ein Lagerteil verbunden. Die Lageröffnungen erstrecken sich als Langlöcher in Montagerichtung. Das erste Bauteil stützt sich in entgegengesetzter Richtung über eine koaxiale Lagerfläche an dem Lagerteil ab.

### Offenbarung der Erfindung

Nach dem Stand der Technik ist das so gelenkig miteinander verbundene Bügelpaar in einem Spritzgießverfahren aus Kunststoff gefertigt, wobei die Gelenkzapfen an den Innenseiten der Seitenwände des übergeordneten Bügels einstückig angegossen sind.

Dadurch sind im Bereich der Gelenke an den Außenseiten keine störende Funktionselemente, z.B. Aussparungen für Lageröffnungen oder Klippverbindungen sichtbar. Ferner werden die Teilevielfalt und die Fertigungskosten verringert. Gleichzeitig ergibt sich ein stabiles Gelenk, das große Anpresskräfte über eine als Walzenlager ausgebildete Lagerbrücke übertragen kann.

Zur Vereinfachung der Fertigung besitzt der untergeordnete Bügel im Anschluss an die Klippaussparung zur offenen Seite des u-förmigen Querschnittprofils des übergeordneten Bügels eine Entformungsaussparung. Dadurch ergibt sich insgesamt eine längliche Aussparung, die im Bereich der Klippaussparung einseitig geschlossen ist, während sie am gegenüberliegenden Ende offen ist. Zur seitlichen Führung des untergeordneten Bügels grenzen an die Klippaussparung bzw. an die Entformungsaussparung Führungsflächen an, die auch Teil von Führungsrippen sein können und sich an den Innenflächen der Seitenwände des übergeordneten Bügels abstützen.

Zur Verbesserung der seitlichen Führung des untergeordneten Bügels kann es ferner zweckmäßig sein, dass der übergeordnete Bügel ein an seiner Deckwand innen angeformtes Zusatzlager besitzt, z.B. in Form eines Stiftes oder einer Rippe. Das Zusatzlager greift in eine Vertiefung des untergeordneten Bügels ein, wodurch dieser insbesondere quer zur Längsrichtung des Wischblatts präzise geführt wird. Zur besseren Entformung des übergeordneten Bügels aus der Spritzgießform sind erfindungsgemäss im Bereich seiner Gelenkzapfen in seiner Deckwand Entformungslöcher vorgesehen.

Zur Erleichterung der Montage ist es erfindungsgemäss vorgesehen, dass die Kanten des untergeordneten Bügels, die zur Deckwand des übergeordneten Bügels weisen, Montageschrägen besitzen. Entsprechend gilt für die Gelenkzapfen der übergeordneten Bügel, dass sie zur offenen Seite des u-förmigen Querschnittprofils ebenfalls Montageschrägen besitzen.

Um die Formstabilität des gesamten Wischblatts bei geringem Materialeinsatz zu optimieren, kann es vorteilhaft sein, bei einem Wischblatt mit einem Hauptbügel, zwei Zwischenbügeln und zwei Krallenbügeln den Hauptbügel aus Blech zu fertigen, während die Zwischenbügel und die Krallenbügel in einem Spritzgießverfahren aus Kunststoff gefertigt werden.

Die erfindungsgemäße gelenkige Verbindung der Bügel eines Tragbügelsystems untereinander kann auch für die gelenkige Verbindung zwischen dem Wischblatt und einem Wischarm verwendet werden, mit dem das Wischblatt gelenkig verbunden ist. Hierzu besitzt das Wischblatt im Bereich des Einhängekastens ein Querschnittprofil eines untergeordneten Bügels und der zugehörige Wischarm weist an seinem zugeordneten Ende das passende Querschnittprofil eines übergeordneten Bügels auf.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Wischblatts,
- Fig. 2: eine perspektivische Ansicht eines Zwischenbügels mit einem Krallenbügel,

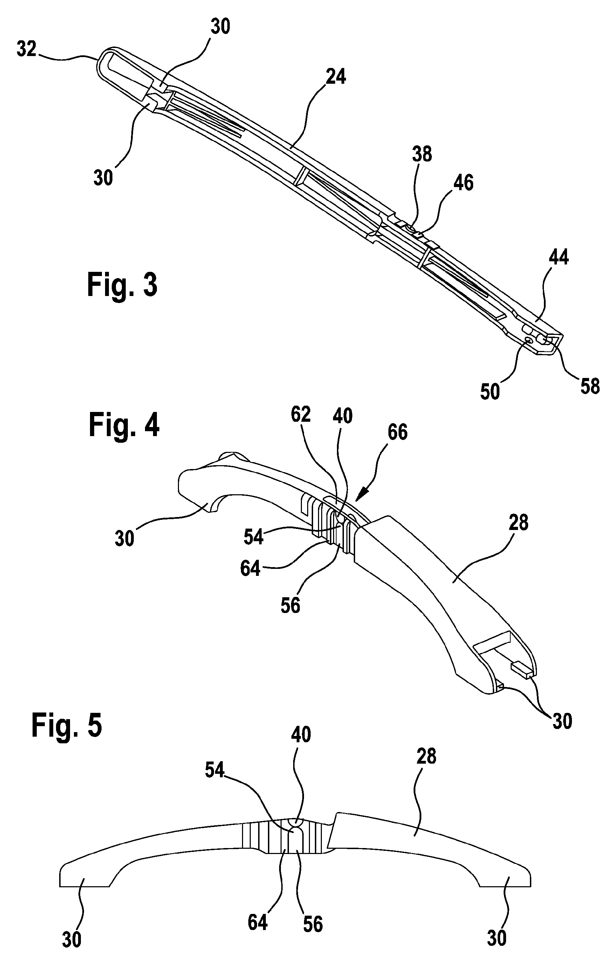

- Fig. 3: eine perspektivische Ansicht eines Krallenbügels,
- Fig. 4: einen Querschnitt entsprechend der Linie IV-IV in Fig. 2 und
- Fig. 5: bis Fig. 7 Varianten zu Fig. 4.

### Ausführungsformen der Erfindung

Ein Wischblatt 10 umfasst einen Hauptbügel 12, zwei Zwischenbügel 24 und zwei Krallenbügel 28. Die Zwischenbügel 24 fungieren in Relation zum Hauptbügel 12 als untergeordnete Bügel, während sie in Relation zu den Krallenbügeln 28 als übergeordnete Bügel anzusehen sind. Dementsprechend ist der Hauptbügel 12 ein übergeordneter Bügel zu den Zwischenbügeln 24, während die Krallenbügel 28 untergeordnete Bügel zu den Zwischenbügeln 24 darstellen. Gelenke 20 verbinden den Hauptbügel 12 gelenkig mit den Zwischenbügeln 24, während Gelenke 26 die Zwischenbügel 24 gelenkig mit den Krallenbügeln 28 verbinden.

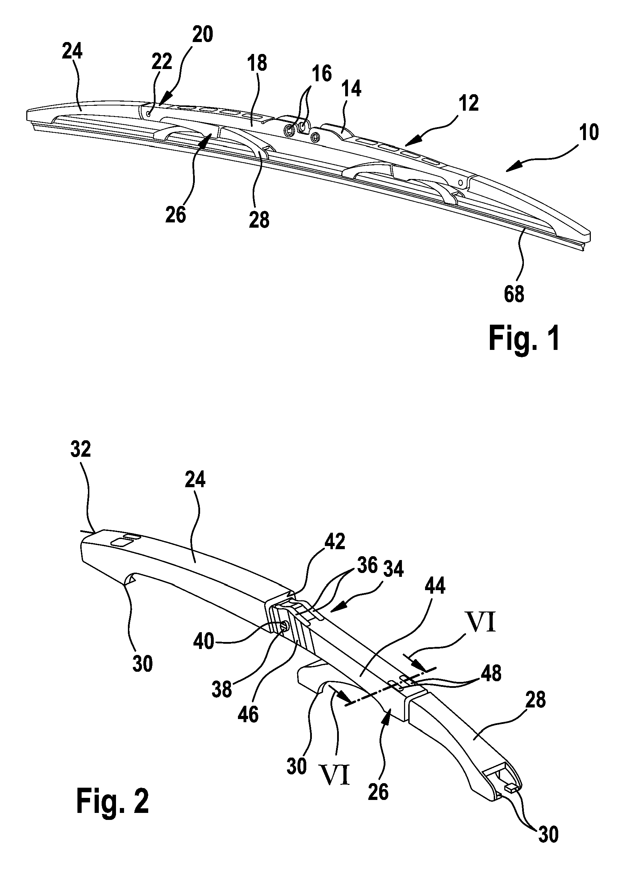

Bei der Ausführung nach Fig. 1 ist der Hauptbügel 12 aus einem Blech gefertigt, während die Zwischenbügel 24 und die Krallenbügel 28 Kunststoffteile sind. In diesem Fall unterscheiden sich die Gelenke 20 und 26. Das Gelenk 20 wird durch Lageröffnungen 22 in den Seitenwänden 18 des Hauptbügels 12 und durch Gelenkzapfen 38 gebildet, die bei der Montage in die Lageröffnungen 22 einrasten. Zur Montageerleichterung besitzen die Gelenkzapfen 38 in Montagerichtung Montageschrägen 40. Im mittleren Bereich des Hauptbügels 12 ist ein Einhängekasten 14 vorgesehen, in dessen Seitenwänden Durchzüge 16 für einen nicht dargestellten Lagerstift angeordnet sind.

Grundsätzlich kann der Hauptbügel 12 auch aus Kunststoff im Spritzgießverfahren hergestellt werden. In diesem Fall wird das Gelenk 20 in der Weise wie das Gelenk 26 ausgeführt.

Im Bereich des Gelenkzapfens 38 ist der Zwischenbügel 24 als Lagerbrücke 34 mit in Längsrichtung verlaufenden Lagerrippen 36 ausgebildet. An die Lagerbrücke 34 zur Stirnwand 32 hin anschließend begrenzt eine durch einen Rand gebildete Anschlagfläche 42 die Schwenkbewegung des Zwischenbügels 24. Die Lagerrippen 36 bilden ein Walzenlager und stützen sich unter Belastung an einer Deckwand des Hauptbügels 12 ab, während die Kräfte in der entgegengesetzten Richtung von den Gelenkzapfen 38 aufgenommen werden. Zur Querführung des Zwischenbügels 24 sind seitlich der Lagerzapfen 38 Führungsflächen 46 angeordnet, die Bestandteil von Führungsrippen sein können.

Die zum inneren und äußeren Ende des Wischblatts 10 weisenden Stirnwände 32 der Zwischenbügel 24 sind geschlossen und fixieren eine Wischleiste 68 in Längsrichtung. Die Zwischenbügel 24 besitzen nach innen versetzt zu den Stirnwänden 32 Krallen 30, mit denen sie die Wischleiste 68 quer zur Längsrichtung halten. Zusätzlich wird die Wischleiste 68 von Krallen 30 an den Krallenbügeln 28 gehalten.

An dem den Stirnwänden 32 entgegengesetzten Enden der Zwischenbügel 24 besitzen diese ein im Querschnitt u-förmiges Querschnittprofil, das von Seitenwänden 44 und einer Deckwand 58 gebildet wird. Innerhalb dieses u-förmigen Profils befindet sich das Gelenk 26. Es wird einerseits durch Gelenkzapfen 50 gebildet, die in Klippaussparungen 54 an den Seitenflächen des Krallenbügels 28 einrasten, und andererseits durch eine als Walzenlager ausgebildete Lagerbrücke 66, die sich an der Innenseite der Deckwand 58 des Zwischenbügels 24 abstützt. Das Lagerspiel an den Gelenkzapfen 50 ist so bemessen, dass unter der Anpresskraft durch einen Wischarm die Kräfte über die Lagerbrücke 66 übertragen werden, während in entgegengesetzter Richtung sich der Krallenbügel 28 an den Gelenkzapfen 50 abstützt.

Die Gelenkzapfen 50 sind an den Innenseiten der Seitenwände 44 des Zwischenbügels 24 angeformt, sodass die Sichtflächen 52 an den Außenseiten der Seitenwände frei von Funktionsmerkmalen glatt gestaltet sein können. Zur besseren Entformung der Krallenbügel 28 besitzen sie in Verlängerung der Klippaussparungen 54 zu der offenen Seite des u-förmigen Querschnittprofils Entformungsaussparungen 56. Zum gleichen Zweck dienen zur besseren Entformung des Zwischenbügels 24 Entformungslöcher 48, die im Bereich der Gelenkzapfen 50 in der Deckwand 58 vorgesehen sind. In unmittelbarer Nachbarschaft an den Klippaussparungen 54 bzw. den Entformungsaussparungen 56 befinden sich Führungsflächen 64, die Bestandteil von Führungsrippen sein können und zur Führung des Krallenbügels 28 dienen.

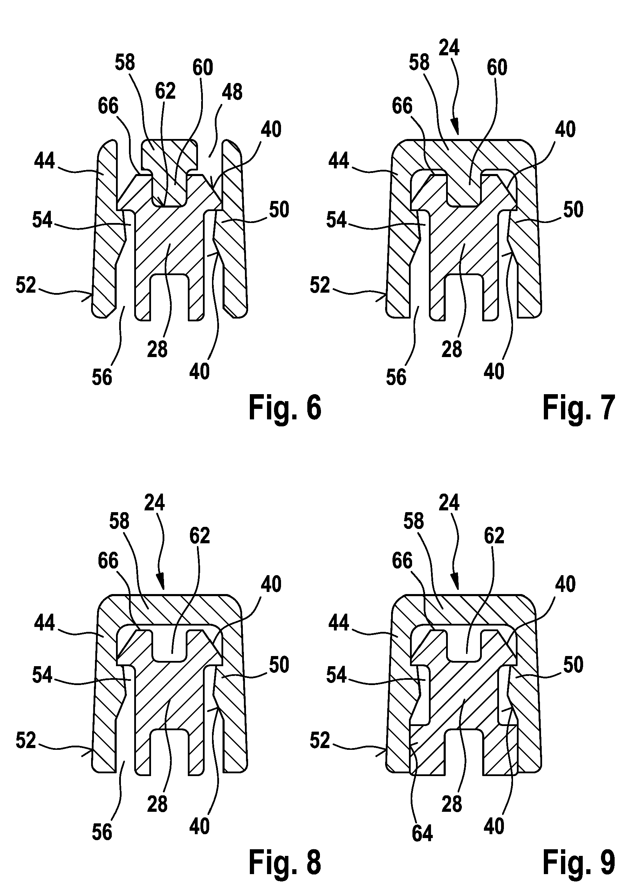

Bei der Ausführung nach Fig. 6 besitzt der Zwischenbügel 28 ein Zusatzlager 60, das an der Deckwand 58 angeformt ist und in eine Vertiefung 62 des Krallenbügels 28 eingreift. Das Zusatzlager 60, das als Zapfen oder als Rippe gestaltet sein kann, führt den Krallenbügel 28 insbesondere quer zur Längsrichtung des Wischblatts 10. In der nicht beanspruchten Ausführung nach Fig. 7 ist auf die Entformungslöcher 48 verzichtet worden. Dies ist u.a. dann möglich, wenn das Zusatzlager 60 in Längsrichtung des Zwischenbügels versetzt zu den Gelenkzapfen 50 angeordnet ist.

Bei der nicht beanspruchten Ausführung nach Fig. 8 wurde auf das Zusatzlager 60 und nach der nicht beanspruchten

Ausführung nach Fig. 9 auf die Entformungsaussparungen 56 verzichtet. Durch diese Maßnahmen vereinfacht sich der Aufbau des Gelenks 26 und es sind geringere Fertigungstoleranzen zu berücksichtigen.

## Patentansprüche

1. Wischblatt (10) mit einem Tragbügelsystem, das gelenkig mit einem Wischarm verbindbar ist und mindestens einen übergeordneten Bügel (12, 24) und mehrere untergeordnete Bügel (24, 28) umfasst, die durch Gelenke (20, 26) schwenkbar miteinander verbunden sind, wobei im Bereich mindestens eines Gelenks (20, 26) der übergeordnete Bügel (12, 24) ein u-förmiges Querschnittprofil aufweist, dessen Seitenwände (18, 44) den untergeordneten Bügel (24, 28) seitlich umfassen, und an den Innenseiten der Seitenwände (44) Gelenkzapfen (50) aufweist, die mit seitlichen Klippaussparungen (54) an dem untergeordneten Bügel (28) eine Klippverbindung und eine Lagerstelle bilden, während sich der untergeordnete Bügel (28) über ein Walzenlager (34, 66) an einer Deckwand (58) des übergeordneten Bügels (24) abstützt, wobei das so gelenkig miteinander verbundene Bügelpaar (12, 24 bzw. 24, 28) in einem Spritzgießverfahren aus Kunststoff gefertigt ist, wobei die Gelenkzapfen (50) an den Innenseiten der Seitenwände (18, 44) des übergeordneten Bügels (18, 24) einstückig angegossen sind, **dadurch gekennzeichnet, dass** der übergeordnete Bügel (12, 24) im Bereich seiner Gelenkzapfen (50) in seiner Deckwand (58) Entformungslöcher (48) besitzt, wobei die seitlichen Kanten des untergeordneten Bügels (24, 28), die zur Deckwand (58) des übergeordneten Bügels (12, 24) weisen, Montageschrägen (40) besitzen.

2. Wischblatt (10) nach Anspruch 1, **dadurch gekennzeichnet, dass** der untergeordnete Bügel (24, 28) im Anschluss an die Klippaussparung (54) zur offenen Seite des u-förmigen Querschnittprofils des übergeordneten Bügels (12, 24) eine Entformungsaussparung (56) aufweist.

3. Wischblatt (10) nach Anspruch 2, **dadurch gekennzeichnet, dass** an die Klippaussparung (54) bzw. an die Entformungsaussparung (56) Führungsflächen (46) angrenzen.

4. Wischblatt (10) nach einem der Ansprüche 1 bis 3, **dadurch gekennzeichnet, dass** der übergeordnete Bügel (12, 24) ein an seiner Deckwand (58) innen angeformtes Zusatzlager (60) besitzt, das in eine Vertiefung (62) des untergeordneten Bügels (24, 28) eingreift.

5. Wischblatt (10) nach einem der vorhergehenden Ansprüche, **dadurch gekennzeichnet, dass** die Gelenkzapfen (50) der übergeordneten Bügel (12, 24) zur offenen Seite des u-förmigen Querschnittprofils Montageschrägen (40) aufweisen.

6. Wischblatt (10) nach einem der vorhergehenden Ansprüche, **dadurch gekennzeichnet, dass** es im Bereich eines Einhängekastens (14) ein Querschnittprofil eines untergeordneten Bügels (24, 28) besitzt und der zugehörige Wischarm an seinem zugeordneten Ende das passende Querschnittprofil eines übergeordneten Bügels (18, 24) aufweist.

## Claims

1. Wiper blade (10) with a supporting bracket system which can be connected to a wiper arm in an articulated manner and comprises at least one superordinate bracket (12, 24) and a plurality of subordinate brackets (24, 28) which are connected pivotably to one another by joints (20, 26), wherein, in the region of at least one joint (20, 26), the superordinate bracket (12, 24) has a U-shaped cross sectional profile, the side walls (18, 44) of which laterally enclose the subordinate bracket (24, 28), and, on the insides of the side walls (44), has pivots (50) which, together with lateral clip cutouts (54) on the subordinate bracket (28), form a clip connection and a bearing point while the subordinate bracket (28) is supported via a rolling bearing (34, 66) on a top wall (58) of the superordinate bracket (24), wherein the pair of brackets (12, 24 or 24, 28) which is interconnected in an articulated manner in this way is manufactured from plastic by injection molding, with the pivots (50) being integrally cast on the insides of the side walls (18, 44) of the superordinate bracket (18, 24), **characterized in that** the superordinate bracket (12, 24) has demolding holes (48) in the region of its pivots (50) in its top wall (58), wherein the lateral edges of the subordinate bracket (24, 28), which edges face the top wall (58) of the superordinate bracket (12, 24), have installation slopes (40).

2. Wiper blade (10) according to Claim 1, **characterized in that** the subordinate bracket (24, 28) has a demolding cutout (56) joining the clip cutout (54) toward the open side of the U-shaped cross sectional profile of the superordinate bracket (12, 24).

3. Wiper blade (10) according to Claim 2, **characterized in that** the clip cutout (54) and the demolding cutout (56) are bordered by guide surfaces (46).

4. Wiper blade (10) according to one of Claims 1 to 3, **characterized in that** the superordinate bracket (12, 24) has an additional bearing (60) which is integrally formed on the inside of its top wall (58) and engages in a depression (62) in the subordinate bracket (24, 28).

5. Wiper blade (10) according to one of the preceding claims, **characterized in that** the pivots (50) of the superordinate brackets (12, 24) have installation slopes (40) toward the open side of the U-shaped cross sectional profile.

6. Wiper blade (10) according to one of the preceding claims, **characterized in that** it has a cross sectional profile of a subordinate bracket (24, 28) in the region of a mounting box (14), and, at its associated end, the associated wiper arm has the matching cross sectional profile of a superordinate bracket (18, 24).

## Revendications

1. Balai d'essuie-glace (10) comprenant un système d'étrier de support qui peut être connecté de manière articulée à un bras d'essuie-glace et qui comprend au moins un étrier principal (12, 24) et plusieurs étriers subordonnés (24, 28), qui sont connectés de manière pivotante les uns aux autres par des articulations (20, 26), l'étrier principal (12, 24), dans la région d'au moins une articulation (20, 26), présentant un profilé de section transversale en forme de U dont les parois latérales (18, 44) entourent latéralement l'étrier subordonné (24, 28), et présentant, au niveau des côtés intérieurs des parois latérales (44), des tourillons d'articulation (50) qui forment avec des évidements d'enclipsage latéraux (54) au niveau de l'étrier subordonné (28), une connexion par enclipsage et un point de palier, tandis que l'étrier subordonné (28) s'appuie par le biais d'un palier à rouleaux (34, 66) contre une paroi de recouvrement (58) de l'étrier principal (24), la paire d'étriers ainsi connectés l'un à l'autre (12, 24, respectivement 24, 28) étant fabriquée par un procédé de moulage par injection en plastique, les tourillons d'articulation (50) étant moulés d'une seule pièce au niveau des côtés intérieurs des parois latérales (18, 44) de l'étrier principal (18, 24), **caractérisé en ce que** l'étrier principal (12, 24) présente, dans la région de ses tourillons d'articulation (50), dans sa paroi de recouvrement (58), des trous de déformation (48), les arêtes latérales de l'étrier subordonné (24, 28), qui sont tournées vers la paroi de recouvrement (58) de l'étrier principal (12, 24), possédant des biseaux de montage (40).

2. Balai d'essuie-glace (10) selon la revendication 1, **caractérisé en ce que** l'étrier subordonné (24, 28) présente un évidement de déformation (56) raccordé à l'évidement d'enclipsage (54) vers le côté ouvert du profilé de section transversale en forme de U de l'étrier principal (12, 24).

3. Balai d'essuie-glace (10) selon la revendication 2, **caractérisé en ce que** des surfaces de guidage (46) sont adjacentes à l'évidement d'enclipsage (54) ou à l'évidement de déformation (56).

4. Balai d'essuie-glace (10) selon l'une quelconque des revendications 1 à 3, **caractérisé en ce que** l'étrier principal (12, 24) possède un palier supplémentaire (60) formé à l'intérieur au niveau de sa paroi de recouvrement (58), lequel vient en prise dans un renfoncement (62) de l'étrier subordonné (24, 28).

5. Balai d'essuie-glace (10) selon l'une quelconque des revendications précédentes, **caractérisé en ce que** les tourillons d'articulation (50) des étriers principaux (12, 24) présentent des biseaux de montage (40) vers le côté ouvert du profilé de section transversale en forme de U.

6. Balai d'essuie-glace (10) selon l'une quelconque des revendications précédentes, **caractérisé en ce qu'**il possède, dans la région d'un compartiment d'accrochage (14), un profilé en section transversale d'un étrier subordonné (24, 28) et le bras d'essuie-glace associé présente, au niveau de son extrémité associée, le profilé en section transversale adapté d'un étrier principal (18, 24).
